# EUROPEAN PATENT APPLICATION

(11) **EP 4 734 657 A1**
(43) Date of publication of application: **29.04.2026**
(21) Application number: 24831833.9
(22) Date of filing: 20.06.2024
(51) Int. Cl.: H05B 3/06, H05B 3/20

(54) **HEATER UNIT, HEATING DEVICE, TEMPERATURE CONTROL SYSTEM, AND ELECTRIC VEHICLE**

(30) Priority: 25.06.2023 CN 202310755154
(71) Applicant: Kyocera Corporation, Kyoto-shi, Kyoto 612-8501 (JP)
(72) Inventor: HIURA, Norimitsu, Kyoto-shi, Kyoto 612-8501 (JP); SHIMAO, Tsubasa, Kyoto-shi, Kyoto 612-8501 (JP)
(74) Representative: Viering, Jentschura & Partner mbB Patent- und Rechtsanwälte
(86) International application number: PCT/JP2024/022476
(87) International publication number: WO 2025/004972

(57) **Abstract**

A heater unit according to the present disclosure, is mounted in a heating device for an electric vehicle, and includes a ceramic heater including a heat generation body; a heat dissipation body having a first surface facing the ceramic heater, and a second surface comprising a heat dissipation surface different from the first surface; and a heat conducting member disposed between the first surface of the heat dissipation body and the ceramic heater, the heat conducting member being in contact with both the ceramic heater and the first surface. The heat conducting member is higher in at least one selected from the group consisting of elasticity, ductility, and malleability than the ceramic heater and the heat dissipation body.

## Description

### TECHNICAL FIELD

The present disclosure relates to a heater unit, a heating device, a temperature control system, and an electric vehicle.

### BACKGROUND OF INVENTION

Recently, there has been a shift from a known engine vehicle to an electric vehicle such as an electric automobile, a hybrid vehicle, and a plug-in hybrid vehicle.

When an electric vehicle is used in a cold region, the energy efficiency of the electrolytic solution contained in the drive battery is lowered, which may reduce the running distance. For this reason, an electric vehicle may be equipped with a heating device for heating the electrolyte contained in the drive battery.

### CITATION LIST

### PATENT LITERATURE

Patent Document 1: JP 2020-136036 A

### SUMMARY

A heater unit according to one aspect of the present disclosure is mounted in a heating device for an electric vehicle, and includes a ceramic heater including a heat generation body; a heat dissipation body having a first surface facing the ceramic heater, and a second surface comprising a heat dissipation surface different from the first surface; and a heat conducting member disposed between the first surface of the heat dissipation body and the ceramic heater, the heat conducting member being in contact with both the ceramic heater and the first surface. The heat conducting member is higher in at least one selected from the group consisting of elasticity, ductility, and malleability than the ceramic heater and the heat dissipation body.

### BRIEF DESCRIPTION OF THE DRAWINGS

FIG. 1 is a schematic perspective view of a heater unit according to a first embodiment.
FIG. 2 is a schematic front view of a heat generation body and a ceramic heater according to the first embodiment.
FIG. 3 is a schematic cross-sectional view of the heater unit according to the first embodiment.
FIG. 4 is a schematic cross-sectional view of the heater unit according to the first embodiment.
FIG. 5 is a schematic cross-sectional view of a heater unit according to a second embodiment.
FIG. 6 is a schematic cross-sectional view of the heater unit according to the second embodiment.
FIG. 7 is a schematic side view of a heat dissipation body according to a third embodiment.
FIG. 8 is a schematic plan view of the heat dissipation body according to the third embodiment.
FIG. 9 is a schematic cross-sectional view of a heating device according to a fourth embodiment.
FIG. 10 is a schematic perspective view of a heating device according to a fifth embodiment.
FIG. 11 is a schematic cross-sectional view of the heating device according to the fifth embodiment.
FIG. 12 is a schematic perspective view of a heating device according to a sixth embodiment.
FIG. 13 is a schematic perspective view of a heating device according to a seventh embodiment.

### DESCRIPTION OF EMBODIMENTS

Embodiments (hereinafter referred to as "embodiments") of a heater unit, a heating device, a temperature control system, and an electric vehicle according to the present disclosure, will be described in detail below with reference to the accompanying drawings. These embodiments are not intended to limit the present disclosure. The respective embodiments can be appropriately combined with each other to the extent that processing contents are not inconsistent. In the following embodiments, the same components are denoted by the same reference signs, and redundant descriptions thereof will be omitted.

An electric vehicle is often provided with a temperature control system for adjusting the performance of an electric vehicle battery. In recent years, with increasing demands for high output and miniaturization of an electric vehicle battery, high performance and miniaturization are also required for a temperature control system. To meet these demands, a heater unit is expected, which includes high output, small size, and high reliability.

### First Embodiment

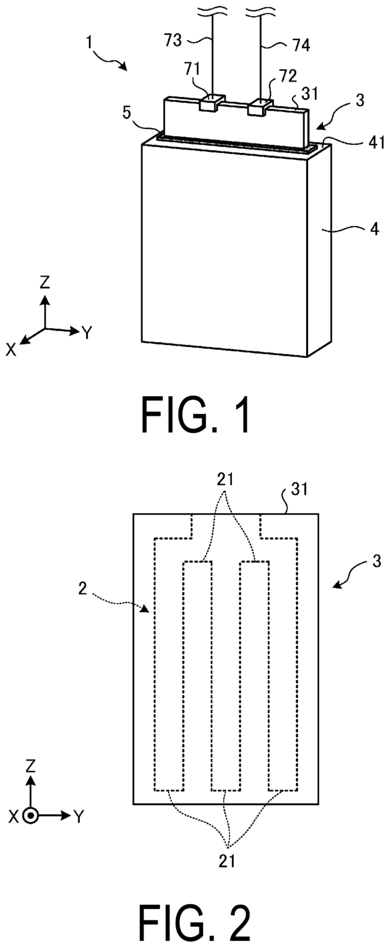

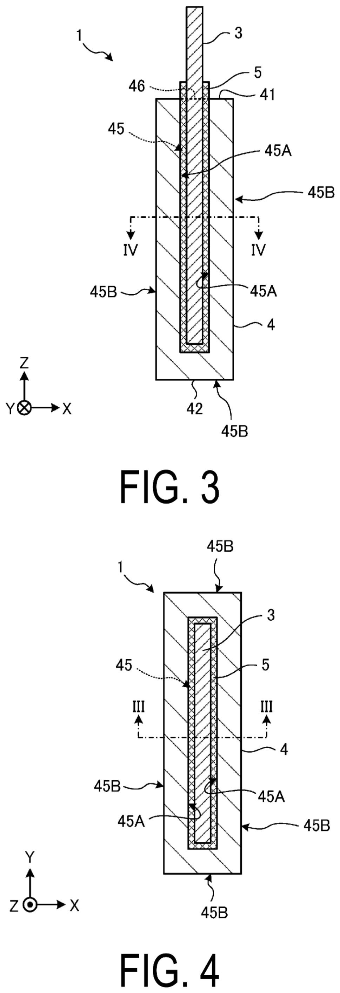

The configuration of a heater unit according to a first embodiment will be described with reference to FIGs. 1 to 4. FIG. 1 is a schematic perspective view of a heater unit according to the first embodiment. FIG. 2 is a schematic front view of a heat generation body and a ceramic heater according to the first embodiment. FIGs. 3 and 4 are schematic cross-sectional views of the heater unit according to the first embodiment. FIG. 3 illustrates a cross-sectional view taken along line III-III illustrated in FIG. 4, and FIG. 4 illustrates a cross-sectional view taken along line IV-IV illustrated in FIG. 3. In FIGs. 3 and 4, a heat generation body 2, terminals 71 and 72, and wiring members 73 and 74 are omitted for illustration.

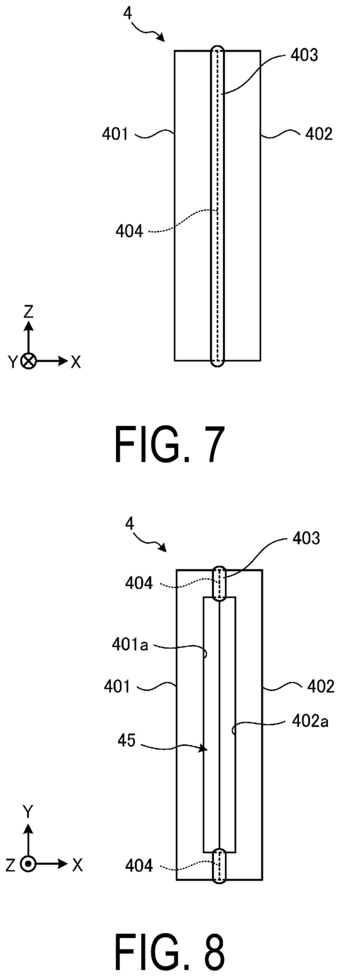

A heater unit 1 according to the first embodiment illustrated in FIGs. 1 to 4 is a heater unit used in a heating device for heating the drive battery of an electric vehicle. The configuration of the heating device including the heater unit 1 will be described below with reference to FIG. 8.

As illustrated in FIGs. 1 and 2, the heater unit 1 according to the first embodiment, includes a ceramic heater 3 including the heat generation body 2, a heat dissipation body 4, and a heat conducting member 5.

The heat generation body 2 is made of, for example, a metal material. The metal used for the heat generation body 2 is, for example, tungsten. The heat generation body 2 generates heat (Joule heat) by flowing electricity.

As illustrated in FIG. 2, the heat generation body 2 is embedded in the ceramic heater 3. The heat generation body 2 may have a linear pattern having a plurality of fold-back portions 21. The pattern drawn by the heat generation body 2 is not limited to the example illustrated in FIG. 2.

One end and the other end of the heat generation body 2 are located on a first end surface 31 (upper end surface in this case) side of the ceramic heater 3. One end of the heat generation body 2 is connected to a wiring member 73 via the terminal 71 provided on the first end surface 31, and the other end of the heat generation body 2 is connected to a wiring member 74 via a terminal 72 provided on the first end surface 31. The heat generation body 2 is connected to an external power source via these terminals 71 and 72 and wiring members 73 and 74.

The ceramic heater 3 has, for example, a rectangular parallelepiped shape. The material used for the ceramic heater 3 includes alumina (Al₂O₃). Alumina is suitable for use as a heating device for an electric vehicle drive battery in that Alumina has higher thermal conductivity and higher thermal resistance and corrosion resistance than other ceramics.

Note that the ceramic heater 3 may contain components other than alumina as the main component. In the present disclosure, the "main component" refers to a component occupying 80 mass% or more of the total 100 mass% of the components constituting the ceramic. Each of components contained in the ceramic may be identified with an X-ray diffractometer using CuKα rays, and a content of each component may be determined, for example, with an inductively coupled plasma (ICP) emission spectrophotometer or an X-ray fluorescence spectrometer.

The main component of the ceramic material used for the ceramic heater 3 is not necessarily alumina. For example, the ceramic heater 3 may contain another ceramic material such as silicon nitride as a main component. The ceramic heater containing a ceramic material as a main component has relatively high hardness and rigidity, and has relatively high resistance to vibration and impact from the outside and pressure from other members.

The heat dissipation body 4 is, for example, a metal member having a rectangular parallelepiped shape. The metal material used for the heat dissipation body 4 is, for example, aluminum. Aluminum is suitable for use as a heating device for an electric vehicle drive battery in that Aluminum is relatively low in cost and has a high thermal conductivity and is light-weight compared with other metals.

The metal material used for the heat dissipation body 4 is not necessarily aluminum. For example, the metal material used for the heat dissipation body 4 may be SUS (stainless steel), copper, or brass.

The heat dissipation body 4 has a first surface 45A facing the ceramic heater 3 and a heat dissipation surface 45B different from the first surface 45A. Specifically, the heat dissipation body 4 includes a housing portion 45, a part of the inner surface of the housing portion 45 constitutes the first surface 45A, and the outer surface of the heat dissipation body 4 constitutes the heat dissipation surface 45B. The housing portion 45 houses the ceramic heater 3 and the heat conducting member 5 described below. Specifically, the housing portion 45 is a bottomed space having an opening 46 at a first end surface 41 (upper end surface here) of the heat dissipation body 4. That is, the heat dissipation body 4 has a second end surface 42 located opposite to the first end surface 41, and the housing portion 45 is closed by the second end surface 42 of the heat dissipation body 4 opposite to the opening 46. The heat dissipation body 4 applies thermal energy received from the ceramic heater 3 in a region including the first surface 45A to the heat medium or the like in contact with the heat dissipation surface 45B via this heat dissipation surface 45B. Although the temperature of the ceramic heater 3 itself can rise to a considerably high temperature in a short time, the speed of this temperature rise can be slowed down by providing the heat dissipation body 4. For example, when the heat medium directly touches the surface of the ceramic heater 3, the state of the heat medium rapidly changes and the long-term reliability of the heater unit 1 cannot be maintained, but even under this situation, providing the heat dissipation body 4 can reduce the deterioration of the reliability caused by this state change.

In the first embodiment, the heat dissipation body 4 is manufactured by cutting a single metal lump. In this case, the risk of heat medium or other foreign matter entering the housing portion 45 from a part other than the opening 46 of the heat dissipation body 4 is reduced, so that the deterioration of the heater unit 1 due to the contamination of foreign matter can be decreased.

As illustrated in FIGs. 1 and 3, a part of the ceramic heater 3 including the first end surface 31 projects from the opening 46 of the heat dissipation body 4 to the outside of the housing portion 45. The heat generation body 2 is located on the part, which is of the ceramic heater 3 and projects from the outside of the housing portion 45. Specifically, at least one of the fold-back portions 21 (see FIG. 2) of the heat generation body 2 projects from the opening 46 of the heat dissipation body 4 to the outside of the housing portion 45. In other words, a part of the pattern of the heat generation body 2 projects from the opening 46 of the heat dissipation body 4 to the outside of the housing portion 45.

The part, which is of the ceramic heater 3 and projects from the opening 46 of the heat dissipation body 4 to the outside of the housing portion 45, is located above the liquid level (see FIG. 8 described below) of the heat medium stored in the container of the heating device when the heater unit 1 is mounted on the heating device, so that the heat medium is less likely to adhere to the part. Thus, by exposing this part from the heat dissipation body 4, the part, which is of the ceramic heater 3 and located below the liquid level of the heat medium, can be protected by the heat dissipation body 4, and the weight of the heater unit 1 can be reduced compared to the case with the heat dissipation body 4 having a size that covers the whole of the heat generation body 2.

The pattern of the heat generation body 2 is located up to the part, which is of the ceramic heater 3 and projects from the opening 46 of the heat dissipation body 4 to the outside of the housing portion 45, thereby the air in the container of the heating device can be directly heated not via the heat dissipation body 4. This can heat the whole container efficiently by heating efficiently the air in the container of the heating device, so that the heating efficiency of the heat medium can be further improved.

The heat conducting member 5 is disposed between the first surface 45A of the heat dissipation body 4 and the ceramic heater 3, and contacts both the ceramic heater 3 and the first surface 45A. The heat conducting member 5 is higher in at least one selected from the group consisting of elasticity, ductility, and malleability higher than the ceramic heater 3 and the heat dissipation body 4. When the heat dissipation body 4 is made of metal as in the present embodiment, the heater and the heat dissipation body 4 might be damaged due to local stress caused by a difference in the degree of thermal expansion between the heat dissipation body 4 and the heater. The heat conducting member 5 of the present embodiment is high in at least one selected from elasticity, ductility, and malleability, and thus can be deformed by itself, such as by stretching or spreading, so that stress caused by this difference in thermal expansion can be mitigated and the reliability of the heater unit 1 can be improved. The heat conducting member 5 can fill a minute gap between the surface of the ceramic heater 3, which is deformed by itself and has high hardness, and the heat dissipation body 4, and so that the efficiency and speed of heat conduction from the ceramic heater 3 to the heat dissipation body 4 can be relatively increased. By providing such a heat conducting member 5, a plurality of problems associated with adopting a ceramic heater having high hardness and high rate of temperature rise are simultaneously solved, and the heater unit with a high performance and high reliability is achieved.

For the above reasons, the heater unit 1 according to the first embodiment is suitable for use as a heating device for an electric vehicle drive battery.

The member used for the heat conducting member 5 includes, for example, graphite. Graphite can efficiently transmit heat generated by the heat generation body 2 to the heat dissipation body 4 while serving as a buffer material to mitigate the impact on the ceramic heater 3 received from the heat dissipation body 4. The member used for the heat conducting member may include aluminum foil. Aluminum has ductility and malleability, thus can efficiently transmit heat generated by the heat generation body 2 to the heat dissipation body 4 while serving as a buffer material, when the heater unit is thermally expanded by heat generated by the heat generation body 2. At this time, the aluminum foil may have a layered structure. When the aluminum foil has a layered structure, the compressive force of the heat conducting member is dispersed during thermal expansion of the heater unit, thereby improving durability. The heat conducting member 5 may be made of a metallized material. The metallized material includes tungsten, molybdenum-manganese.

The member used for the heat conducting member 5 may be sheet-shaped. For example, the member used for the heat conducting member 5 may be a graphite sheet. By using the sheet-shaped heat conducting member 5, the heat conducting member 5 is easy to be positioned between the ceramic heater 3 and the heat dissipation body 4 without any gap. Specifically, as illustrated in FIGs. 3 and 4, the heat conducting member 5 covers the entire surface of the ceramic heater 3 and the entire surface of the heat dissipation body 4 without any gap in the region where the ceramic heater 3 and the heat dissipation body 4 face each other (the inside of the housing portion 45). "Covering without any gap" means that no region exists in which the ceramic heater 3 and the heat dissipation body 4 directly face each other without interposing the heat conducting member 5.

With such a configuration, a local temperature difference is less likely to occur in the ceramic heater 3 than in the case with a gap in a part of the region where the ceramic heater 3 and the heat dissipation body 4 face each other, so that cracking of the ceramic heater 3 due to thermal shock caused by a local temperature difference, can be more suitably reduced. In other words, durability of the ceramic heater 3 can be further enhanced. Heat can be transferred from the heat generation body 2 to the heat dissipation body 4 more efficiently than in the case with a gap in a part of the region where the ceramic heater 3 and the heat dissipation body 4 face each other.

The sheet-shaped heat conducting member 5 needs not necessarily be a graphite sheet. The sheet-shaped heat conducting member 5 may be, for example, such as a silicon sheet or a resin sheet other than a graphite sheet. The heat conducting member 5 is not necessarily required to be sheet-shaped but may be paste-like. The paste-like heat conducting member 5 includes boron nitride and silver. The member used for the heat conducting member 5 may include, for example, an oil compound. An adhesive may be positioned between the heat conducting member 5 and the heat dissipation body 4. Although not illustrated, the heat conducting member 5 may be positioned only where the heat generation body 2 exists or only where the heat generation body 2 does not exist, on the surface of the ceramic heater 3.

As illustrated in FIGs. 1 and 3, the heat conducting member 5 may project from the opening 46 of the heat dissipation body 4 to the outside of the housing portion 45. Such a configuration can reduce the risk of deterioration of the heater unit 1 due to contamination of the housing portion 45 with heat medium or other foreign matter.

### Second Embodiment

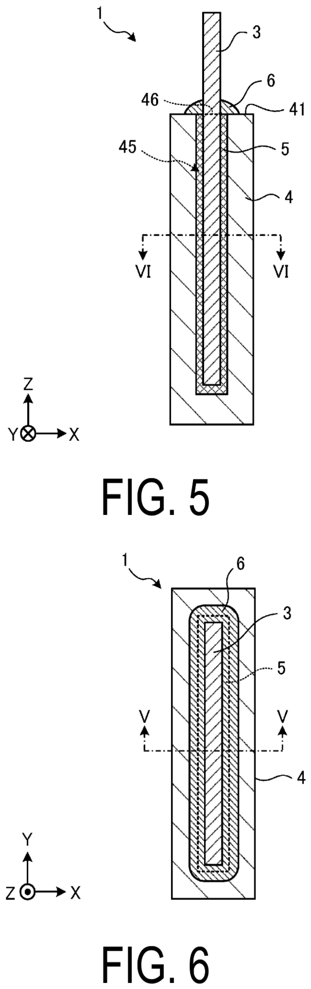

FIGs. 5 and 6 are schematic cross-sectional views of the heater unit 1 according to a second embodiment. FIG. 5 illustrates a cross-sectional view taken along line V-V illustrated in FIG. 6, and FIG. 6 illustrates a cross-sectional view taken along line VI-VI illustrated in FIG. 5. FIGs. 5 and 6 do not illustrate the heat generation body 2, the terminals 71 and 72, and the wiring members 73 and 74.

As illustrated in FIGs. 5 and 6, the heater unit 1 according to the second embodiment may further include a sealing portion 6. The member used for the sealing portion 6 may include, for example, glass or resin. The sealing portion 6 is positioned over the first end surface 41, the heat conducting member 5, and the ceramic heater 3, on the first end surface 41 of the heat dissipation body 4. As illustrated in FIG. 6, the sealing portion 6 is circumferentially positioned so as to surround the ceramic heater 3 in plan view.

Thus, in the heater unit 1 according to the second embodiment, the opening 46 of the housing portion 45 is sealed using the sealing portion 6. Such configuration further reduces the risk of deterioration of the heater unit 1 due to contamination of the housing portion 45 with heat medium or other foreign matter.

### Third Embodiment

In the first embodiment described above, an example with the heat dissipation body 4 composed of a single metal member, has been described. In a third embodiment, an example with the heat dissipation body 4 composed of a plurality of metal members, will be described. FIG. 7 is a schematic side view of the heat dissipation body 4 according to the third embodiment. FIG. 8 is a schematic plan view of the heat dissipation body 4 according to the third embodiment.

As illustrated in FIGs. 7 and 8, the heat dissipation body 4 according to the third embodiment is composed of 2 metal members, a first member 401 and a second member 402. The heat dissipation body 4 is formed by combining the first member 401 and the second member 402. Specifically, a recessed portion 401a corresponding to a part of the housing portion 45 is formed in the first member 401, and a recessed portion 402a corresponding to a part of the housing portion 45 is also formed in the second member 402. The heat dissipation body 4 having the housing portion 45 is formed by combining the first member 401 and the second member 402.

The heat dissipation body 4 according to the third embodiment includes a bonding portion 403 in a contact point between the first member 401 and the second member 402. The bonding portion 403 is a position with brazing or welding performed. The bonding portion 403 may be, for example, a weld trace. The bonding portion 403 covers the entire circumference of the contact point between the first member 401 and the second member 402, on the surface of the heat dissipation body 4.

As described above, the first member 401 and the second member, which constitute the heat dissipation body 4 in the third embodiment, are joined by brazing or welding. Such configuration can reduce the risk of contamination of the housing portion 45 with heat medium or other foreign matter from the gap between the first member 401 and the second member 402, thereby reducing the deterioration of the heater unit 1 due to the contamination of foreign matter.

Although an example has been described with the heat dissipation body 4 composed of 2 metal members (the first member 401 and the second member 402), the heat dissipation body 4 may be composed of 3 or more metal members.

### Fourth Embodiment

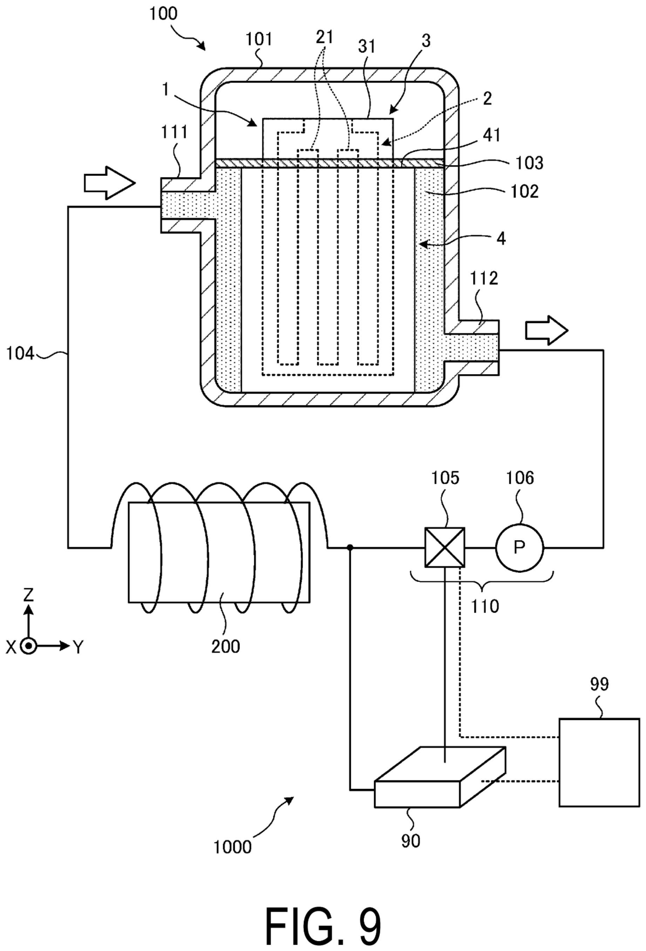

In a fourth embodiment, an example of the configuration of the heating device mounting the heater unit 1, will be described with reference to FIG. 9. FIG. 9 is a schematic cross-sectional view of the heating device according to the fourth embodiment. In FIG. 9, the terminals 71 and 72 and the wiring members 73 and 74 are omitted for illustration.

A heating device 100 according to the fourth embodiment illustrated in FIG. 9 is a heating device for heating the drive battery of the electric vehicle, and is disposed near the drive battery within the electric vehicle. The heating device 100 heats a heat medium 102 (an example of a heat solvent) by using the heater unit 1, and heats a drive battery 200 by using the heated heat medium 102.

As illustrated in FIG. 9, the heating device 100 includes the heater unit 1, a circulation mechanism 110 for circulating the heat medium 102 heated by the heater unit 1, a container 101 as a container body for storing the circulating heat medium 102, and an inner lid 103. The circulation mechanism 110 includes a channel 104, a valve 105, and a pump 106.

The container 101 is formed of, for example, a resin material. Not limited to this, the container 101 may also be formed of a metal material. The container 101 may be formed of a material other than a resin material and a metal material.

The container 101 contains the heater unit 1, the heat medium 102, and the inner lid 103. Although only one heater unit 1 is illustrated in FIG. 9, a plurality of heater units 1 may be housed in the container 101. In this case, the plurality of heater units 1 may be arranged side by side, for example, in the depth method (X axis direction) of the paper in FIG. 9.

The container 101 includes an inlet portion 111 and an outlet portion 112, of the heat medium 102. One end of the channel 104 described below is connected to the inlet portion 111, and the other end of the channel 104 is connected to the outlet portion 112. A circulating path of the heat medium 102 is formed by the container 101 and the channel 104.

The heat medium 102 is, for example, water. Not limited to this, the heat medium 102 may be a liquid other than water, such as oil. In the heating device 100, at least a part of the heater unit 1 is contained in the container 101, and at least a part of the heat dissipation surface 45B is in contact with the heat medium 102. The heating device 100 including the heater unit 1 of each embodiment described above has a relatively high temperature rise rate of the heat medium 102 and high reliability.

The heater unit 1 is housed in the container 101 with the first end surface 31 of the ceramic heater 3 facing upward. The water level of the heat medium 102 in the container 101 is set to be the same position as the first end surface 41 of the heat dissipation body 4 or lower than the first end surface 41. That is, the water level of the heat medium 102 is set not to be higher than the part, which is of the ceramic heater 3 and exposed from the heat dissipation body 4. This can reduce adhesion of the heat medium 102 to the ceramic heater 3 exposed from the heat dissipation body 4.

The inner lid 103 is placed on the first end surface 41 of the heat dissipation body 4. The inner lid 103 has an opening for inserting the ceramic heater 3, which projects upward of the inner lid 103 through the opening. Thus, providing the inner lid 103 within the container 101 can further suitably reduce adhesion of the heat medium 102 to the ceramic heater 3 exposed from the heat dissipation body 4.

The heat generation body 2 is positioned above the liquid level of the heat medium 102 in the container 101. Specifically, at least one of the fold-back portions 21 of the heat generation body 2 is positioned above the liquid level of the heat medium 102 within the container 101. In other words, a part of the pattern of the heat generation body 2 is positioned above the liquid level of the heat medium 102 within the container 101. Such configuration can improve the heating efficiency as compared with the case with the heat generation body 2 not positioned above the liquid level of the heat medium 102.

The channel 104 constitutes a part of the circulation path of the heat medium 102. The channel 104 extends so that at least a part thereof contacts or approaches the drive battery 200. In the example illustrated in FIG. 9, a part of the channel 104 spirally surrounds the drive battery 200, but the channel 104 needs not necessarily surround the drive battery 200. The channel 104 is provided with the valve 105 and the pump 106. The valve 105 opens and closes the channel 104. The valve 105 can also switch to the channel 94 on the side of a heat pump unit 90 described below. The pump 106 generates a flow of the heat medium 102 from the inlet portion 111 to the outlet portion 112 by the action of pressure. The arrangement of the heating device 100, the valve 105, and the pump 106 in the circulating path of the heat medium 102 is not limited to the example illustrated in FIG. 9.

The heating device 100 is configured as described above, and the heat medium 102 heated by the heater unit 1 flows in the vicinity of the drive battery 200, thereby heating the drive battery 200. The heating device 100 provided with the heater unit 1 has a high heating rate by the ceramic heater 3, high heating energy efficiency, and high reliability. The electric automobile provided with the heater unit 1 and the heating device 100 can raise the temperature of the portion to be heated in a relatively short time, for example, at a timing when the temperature of the battery needs to be raised, such as when starting.

The present invention also provides a temperature control system 1000 for an electric vehicle, which includes the heater unit 1 described above; a heat medium 102 heated by at least the heater unit 1; a heat pump unit 90 configured to adjust the temperature of the heat solvent; a circulation mechanism 110 configured to circulate the heat medium 102; and a controller 99. The controller 99 controls the operation of at least the circulation mechanism 110 to select a channel such that the heat medium 102 flows through the heater unit 1 and/or the heat pump unit 90. The temperature control system 1000 according to the present embodiment, further includes a temperature sensor configured to sense a temperature of a battery. The controller 99 causes the heat medium 102 to flow to the heater unit 1 when the temperature sensed by the temperature sensor is less than a specific temperature, and to the heat pump unit 90 when the sensed temperature is not less than the specific temperature.

The heat pump unit 90 is a general heat pump unit and has both heating and cooling mechanisms. The heat pump unit 90 has a relatively high thermal efficiency, a relatively low running cost in terms of energy when used for a relatively long time, and has an advantage that the temperature can be adjusted even when the battery overheats due to a long driving time, for example. However, the heating rate itself is relatively slow. For example, the heat pump unit 90 alone takes a long time to heat the battery to a temperature at which sufficient performance can be exhibited when the electric vehicle is started, and the load on the battery is high, which may affect the performance of the electric vehicle. In the temperature control system 1000 of the present embodiment, by selecting a channel by the controller 99, for example, when the electric vehicle is started, the battery is rapidly heated to a temperature at which sufficient performance can be obtained in a short time by the heater unit 1 including the ceramic heater 3, and thereafter, the temperature of the battery can be controlled to a suitable temperature with high energy efficiency by the heat pump unit 90. Although the heater unit 1 is preferably disposed near the heat pump unit 90 in order to improve the heat balance, the heat pump unit 90 includes a compressor, and vibration by the compressor is transmitted around the heat pump unit 90. For example, in a general PTC heater, the hardness of the heater device itself is low, relatively easily broken against vibration, and from the viewpoint of durability, disposing the heater device near the heat pump unit 90 in a state with the heat balance satisfactory, may be difficult. The heater unit 1 includes the ceramic heater 3 having high durability, and the impact and pressure received by vibration are mitigated by the heat conducting member 5 that is high in at least one selected from the group consisting of elasticity, ductility, and malleability. Thus, the temperature control system 1000 can heat the heat medium 102 at a high speed, has high thermal efficiency, and has sufficient durability.

### Fifth Embodiment

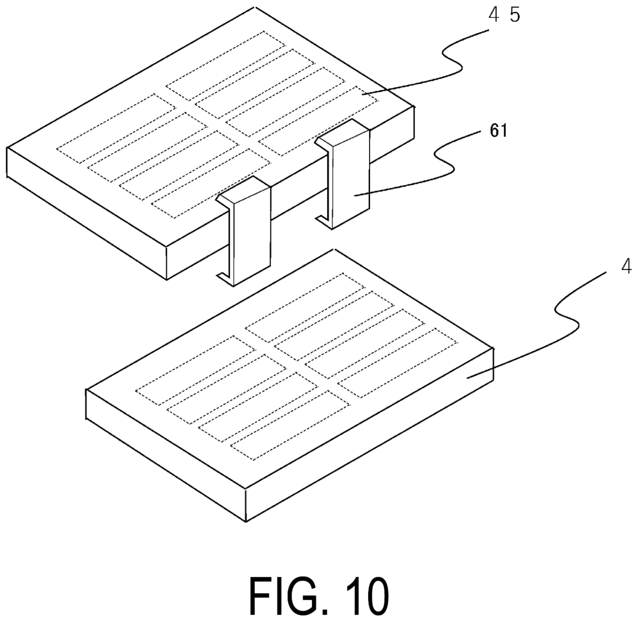

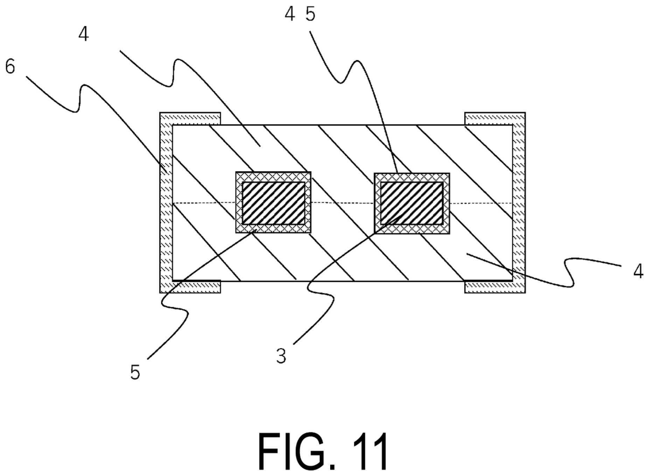

In a fifth embodiment, an example will be described with the heat dissipation body 4 of the third embodiment having a different shape. FIG. 10 is a schematic perspective view of the heating device according to the fifth embodiment. FIG. 11 is a schematic cross-sectional view of the heating device according to the fifth embodiment.

As illustrated in FIGs. 10 and 11, the heat dissipation body 4 according to the fifth embodiment is composed of at least 2 members, and may have a recessed portion in the housing portion.

The heater unit and the heat conducting member 5 are located in the recessed portion of the heat dissipation body 4, which may be crimped by a leaf spring 61. By fixing the heat dissipation body with the leaf spring 61, which can expand and contract in accordance with thermal expansion, concentration of thermal stress caused by thermal expansion of the heater unit can be mitigated.

Providing the recessed portion can provide a region in which the heater unit and the heat conducting member 5 can be thermally expanded, so that concentration of thermal stress caused by thermal expansion can be reduced.

### Sixth Embodiment

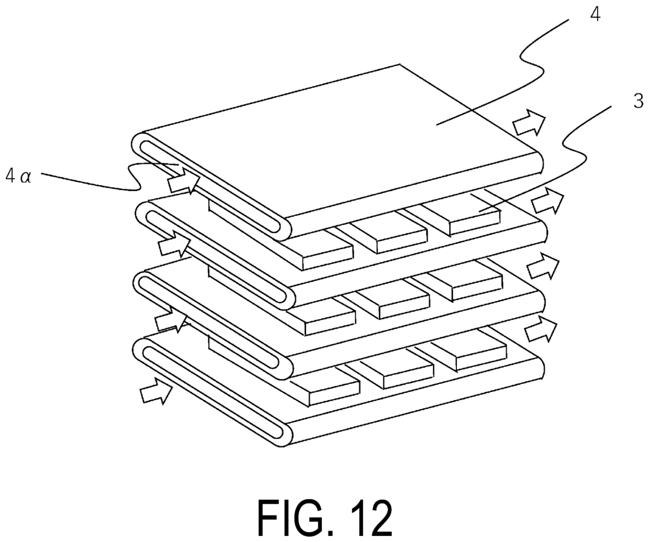

In a sixth embodiment, an example will be described with the heat dissipation body 4 of the above embodiments having different shapes. FIG. 12 is a schematic exploded perspective view of the heating device according to the sixth embodiment. In FIG. 12, the members are illustrated in a state with the members separated from each other in the vertical direction in order to facilitate understanding of the structure, but in fact, the members are in contact with each other in the vertical direction. As illustrated in FIG. 12, in the sixth embodiment, the heat dissipation body 4 has a pipe line 4α, and the heat dissipation surface 45B is disposed at least partially on the inner surface of the pipe line 4α. At this time, the heat medium flows in the direction of the arrow as illustrated in FIG. 12. Although not illustrated in FIG. 12, the gap between the ceramic heater 3 and the heat dissipation body 4 is provided with the heat conducting member 5 that is higher in at least one selected from the group consisting of elasticity, ductility, and malleability than both the ceramic heater 3 and the heat dissipation body 4, which has an effect that is the same as or similar to those of the other embodiments. As illustrated in FIG. 12, the heater unit of the sixth embodiment includes a plurality of ceramic heaters 3 arranged along the axis direction of the pipe line 4α. A plurality of structures each including the ceramic heater 3, the heat dissipation body 4, and the heat conducting member 5, are layered. Each of the ceramic heaters 3 includes an electrode, via which the output can be controlled. The sixth embodiment includes a plurality of pipe lines 4α (i.e., a plurality of channels of heat medium), and a plurality of ceramic heaters 3 are arranged along the respective axis directions of the corresponding pipe lines 4α (i.e., along the direction in which the heat medium flows). The heater unit of the sixth embodiment can finely and accurately adjust the degree of heating of the heat medium by controlling the individual main forces of the plurality of ceramic heaters 3. In the heating device 100 illustrated in FIG. 9, the heater unit of the sixth embodiment may be used as the heater unit. The present invention also provides both of a heating device and a temperature control system using the heater unit of the sixth embodiment.

### Seventh Embodiment

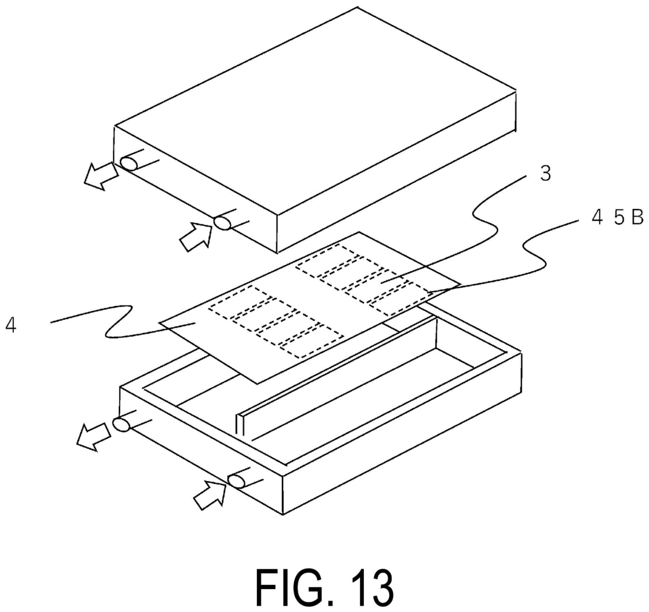

In a seventh embodiment, an example will be described with the above heat dissipation body 4 having a different shape. FIG. 13 is a schematic exploded perspective view of a heater unit according to the seventh embodiment. In FIG. 7, the respective members are illustrated separated from each other in an exploded state so that the structure can be easily understood, but in reality, the respective members are assembled in contact with each other.

As illustrated in FIG. 13, the seventh embodiment includes a casing having an opening portion, the heat dissipation body 4 is located near the opening portion and has the heat dissipation surface 45B covering the opening portion, and at least one surface inside the casing and the heat dissipation surface 45B constitute a channel. In the seventh embodiment, the heat medium passing through the channel is heated via the heat dissipation surface 45B. Although not illustrated in FIG. 13, the seventh embodiment also includes the heat conducting member 5 in a gap between the ceramic heater 3 and the heat dissipation body 4. This heat conducting member 5 is higher in at least one selected from the group consisting of elasticity, ductility, and malleability than both the ceramic heater 3 and the heat dissipation body 4, thereby having an effect that is the same as or similar to those of the other embodiments.

In the seventh embodiment, the channel allows the heat medium to flow along the heat dissipation surface 45B for a relatively long time. The heat dissipation surface 45B includes a groove-like portion (not illustrated), which may constitute at least a part of the channel. Thus, the overheating efficiency of the channel itself can be relatively increased. The inner surface of the channel may be provided with fine irregularities, for example, an inner surface of the channel having a wavy cross section in top surface view. By providing such irregularities, a turbulence is generated in the heat medium flowing through the channel, thereby further improving the heating efficiency. When the channel constituted by the heat dissipation surface 45B includes irregularities, increasing the contact surface area with the heat medium can further improve the heating efficiency. Fins may be attached to the heat dissipation body 4 to provide a plurality of passages in the channel. This generates a turbulent flow in the heat medium flowing through the channel, thereby further improving the heating efficiency. The direction in which the fins extend, may be perpendicular to the heat dissipation body 4 or may be wavy.

In the heater unit of the seventh embodiment, a plurality of ceramic heaters 3 are arranged on one main surface of the heating body, and the heat generation amount is large. The heater unit of the seventh embodiment can also finely and accurately adjust the degree of heating of the heat medium by controlling the individual outputs of the plurality of ceramic heaters 3. As illustrated in FIG. 13, the heater unit 1 may be sandwiched by other casing constituting a part of the channel. The gap between the other casing and the ceramic heater 3 preferably includes members having a structure which is the same as or similar to those of the heat dissipation body 4 and the heat conducting member 5. In the heating device 100 illustrated in FIG. 9, the heater unit of the seventh embodiment may be used as the heater unit, needless to say. The present invention also provides both of a heating device and a temperature control system using the heater unit of the seventh embodiment.

The present invention also provides an electric vehicle including the heater unit, the heating device, and the temperature control system of each embodiment described above. In the electric vehicle of the present invention, the temperature is raised in a short time to a temperature at which, for example, the battery exhibits a sufficient function in a short time when starting, so that a suitable operating state can be achieved in a short time without increasing the battery load. That is, both durability and performance are excellent. Note that the object to be heated is not limited to the battery, and the same or similar effect is achieved for a part required to be heated in a short time. The electric vehicle of the present invention exhibits excellent effects in terms of performance, durability, and safety, especially in a cold region.

The presently disclosed embodiments should be considered illustrative and not restrictive in all respects. Indeed, the above embodiments may be embodied in various forms. The above embodiments may be omitted, substituted, or modified in various forms without departing from the scope and spirit of the appended claims.

### REFERENCE SIGNS

1: Heater unit
2: Heat generation body
3: Ceramic heater
4: Heat dissipation body
5: Heat conducting member
6: Sealing portion
31: First end surface
41: First end surface
42: Second end surface
45: Housing portion
46: Opening
90: Heat pump unit
99: Controller
100: Heating device
101: Container
102: Heat medium
103: Inner lid
104: Channel
105: Valve
106: Pump
110: Circulation period
111: Inlet portion
112: Outlet portion
200: Drive battery
1000: Temperature control system

## Claims

1. A heater unit mounted in a heating device for an electric vehicle, the heater unit comprising:
a ceramic heater comprising a heat generation body;
a heat dissipation body comprising
a first surface facing the ceramic heater, and
a second surface comprising a heat dissipation surface different from the first surface; and
a heat conducting member disposed between the first surface of the heat dissipation body and the ceramic heater, the heat conducting member being in contact with both the ceramic heater and the first surface,
wherein the heat conducting member is higher in at least one selected from the group consisting of elasticity, ductility, and malleability than the ceramic heater and the heat dissipation body.

2. The heater unit according to claim 1, wherein
the ceramic heater comprises alumina as a main component.

3. The heater unit according to claim 1, wherein
the heat dissipation body comprises aluminum as a main component.

4. The heater unit according to claim 1, wherein
the heat conducting member is graphite.

5. The heater unit according to claim 1, wherein
the heat conducting member is aluminum foil.

6. The heater unit according to claim 5, wherein
the heat conducting member has a layered structure.

7. The heater unit according to claim 1, wherein
in a region where the ceramic heater and the heat dissipation body face each other, the heat conducting member covers an entire surface of the ceramic heater and an entire surface of the heat dissipation body.

8. The heater unit according to claim 1, wherein
the heat dissipation body is composed of at least two members, and
the heat dissipation body comprises a housing portion housing the ceramic heater.

9. The heater unit according to claim 8, wherein
the heat dissipation body is provided with a recessed portion, and
the ceramic heater and the heat conducting member are located in the recessed portion.

10. The heater unit according to claim 8, further comprising:
a crimp member configured to crimp the heat dissipation body,
wherein the crimp member is a leaf spring.

11. The heater unit according to claim 8, wherein
the housing portion is provided with an opening on one end surface of the heat dissipation body, and
the ceramic heater projects from the opening to an outside of the housing portion.

12. The heater unit according to claim 11, wherein
the heat conducting member projects from the opening to the outside of the housing portion.

13. The heater unit according to claim 8, wherein
the heat dissipation body comprises at least a first member and a second member, and
the first member and the second member are joined to each other by brazing or welding.

14. The heater unit according to claim 1, wherein
the heat dissipation body comprises a pipe line, and
the heat dissipation surface is disposed on at least a portion of an inner surface of the pipe line.

15. The heater unit according to claim 14, wherein
a plurality of the ceramic heaters are arranged along an axis direction of the pipe line.

16. The heater unit according to claim 14, wherein
a plurality of structures each comprising the ceramic heater, the heat dissipation body, and the heat conducting member are layered, and
in a region where the ceramic heater and the heat dissipation body of different structures of the plurality of structures face each other, a second heat conducting member is disposed, the second heat conducting member being higher in at least one selected from the group consisting of elasticity, ductility, and malleability than the ceramic heater and the heat dissipation body.

17. The heater unit according to claim 1, further comprising:
a casing provided with an opening portion,
wherein the heat dissipation body is located near the opening portion and comprises the heat dissipation surface covering the opening portion, and
at least one surface inside the casing and the heat dissipation surface constitute a channel.

18. The heater unit according to claim 17, wherein
at least one surface inside the casing comprises a first groove-like portion, and
the first groove-like portion constitutes at least a portion of the channel.

19. The heater unit according to claim 17, wherein
the heat dissipation surface comprises a second groove-like portion, and
the second groove-like portion constitutes at least a portion of the channel.

20. A heating device for an electric vehicle, comprising:
the heater unit according to claim 1; and
a circulation mechanism configured to circulate a heat solvent heated by the heater unit.

21. A heating device for an electric vehicle, comprising:
the heater unit according to claim 11;
a circulation mechanism configured to circulate a heat solvent heated by the heater unit; and
a container body configured to store the heat solvent in circulation,
wherein the heater unit is at least partially housed in the container body, and
at least a portion of the heat dissipation surface is in contact with the heat solvent.

22. A heating device for an electric vehicle, comprising:
the heater unit according to claim 14; and
a circulation mechanism configured to circulate a heat solvent heated by the heater unit,
wherein the heat solvent flows through the pipe line of the heat dissipation body.

23. A heating device for an electric vehicle, comprising:
the heater unit according to claim 17; and
a circulation mechanism configured to circulate a heat solvent heated by the heater unit,
wherein the heat solvent flows through the channel.

24. A temperature control system for an electric vehicle, comprising:
the heater unit according to claim 1;
a heat solvent heated by at least the heater unit;
a heat pump unit configured to adjust a temperature of the heat solvent;
a circulation mechanism configured to circulate the heat solvent; and
a controller,
wherein the controller is configured to control an operation of the circulation mechanism to select a channel in a manner that the heat solvent flows through the heater unit and/or the heat pump unit.

25. The temperature control system according to claim 24, further comprising:
a temperature sensor configured to sense a temperature of a temperature-controlled portion in the electric vehicle,
wherein the controller causes the heat solvent to flow to the heater unit when the temperature sensed by the temperature sensor is less than a specific temperature, and to the heat pump unit when the sensed temperature is not less than the specific temperature.

26. An electric vehicle comprising:
the heater unit according to claim 1.
